# EUROPEAN PATENT APPLICATION

(11) **EP 3 158 863 A2**
(43) Date of publication of application: **26.04.2017**
(21) Application number: 16191217.5
(22) Date of filing: 28.09.2016
(51) Int. Cl.: A01K 97/10

(54) **FISHING POLE SUPPORT APPARATUS**

(30) Priority: 02.10.2015 GB 201517464
(71) Applicant: H. Young (Operations) Limited, RG14 1BD (GB)
(72) Inventor: Little, Shaun, Milton Keynes, Buckinghamshire MK5 8HL (GB)
(74) Representative: Bennett, Adrian Robert J.

(57) **Abstract**

In a first aspect, the present invention provides a fishing pole support apparatus (10) comprising: a pole support surface (12); and a laterally repositionable divider (14) connectable to the support apparatus to provide a lateral stop on the pole support surface. The invention also provides a kit of parts and a laterally repositionable divider therefor. In a further aspect, the present invention provides a kit of parts for a fishing pole support apparatus (10) comprising: a pole support comprising a pole support surface (12) and at least one leg attachment (114); a first leg set comprising a first removable leg (116) having a first minimum length, the first removable leg removably attachable to the at least one leg attachment; and a second leg set comprising a second removable leg (118) having a second minimum length different to the first minimum length, the second removable leg removably attachable to the at least one leg attachment.

## Description

The present invention relates to pole fishing accessories, and particularly but not exclusively to fishing pole support apparatus.

### BACKGROUND OF THE INVENTION

Pole fishing is a type of fishing which is traditionally performed with a long pole. The extreme length of the pole allows the angler to project to pole over a body of water in order to position the tackle accurately to provide the optimum chance of catching fish.

Fishing poles are typically constructed of a number of slightly tapering carbon fibre tubes of 1-2 meters in length which can be telescoped to adjust the length of the pole. Fishing poles of this type can often be over 10 meters long or, in extreme cases, around 20 meters long.

During fishing, the angler will typically adjust the length of the pole regularly. This is most prevalent in competition fishing, where pole sections must be quickly and easily changed to maximise the change of a successful catch. In other circumstances, an angler may leave the pole the same length and project it over a body of water in the same position for an extended period of time.

As such, an angler using a pole will regularly require some assistance is supporting the pole. In addition, supporting the pole is advisable to avoid breakage of a long pole flexing under its own weight, to avoid soiling the pole on the ground, or to avoid the end of the pole digging into the earth behind the angler when hauling it in at speed.

In order to support poles, pole rollers are typically utilised. A pole roller is typically set up several meters behind the angler, and is used to support the rear of the pole while sections of the pole closer to the tip are extended or contracted. The roller will typically have a horizontal, or V-shaped pole support which is formed of a roller having an axis transverse to that of the pole when supporting the pole, such that the pole can be rolled forwards and backwards over the pole support as required with minimal resistance.

Pole rollers typically have four legs which are used to locate the pole support at the appropriate height as required by the angler. The pole support is typically located above the legs of the pole roller, and the pole is rested on the pole support when required. In some cases, an angler may have several poles in operation at the same time, so it is known to use a single pole roller to support a plurality of poles. In some cases, the pole roller is divided into a number or sections to accommodate and separate multiple poles on the same pole roller to avoid clashing or damage to each of the poles.

Pole rollers have been in use for many years, but there remains the possibility for improvement to known pole rollers. Therefore, it is an object of the present invention to provide an improved pole roller for use in pole fishing.

### STATEMENT OF INVENTION

In a first aspect, the present invention provides a fishing pole support apparatus comprising: a pole support surface; and a laterally repositionable divider connectable to the support apparatus to provide a lateral stop for the pole support surface.

When fishing with a single pole, it is desirable to have the maximum available area of pole support surface to support the pole and to ship the pole across when removing or adding sections to the pole. Therefore, it is not desirable for anything to impede lateral movement across the pole support surface. However, when an angler is using more than one pole, it is desirable to separate the poles across the pole support surface using a divider.

An angler may vary the number of poles they use during a fishing session, so the present invention provides that a lateral divider can be removably connected to the support apparatus to thereby provide a lateral stop for the pole support surface to prevent multiple poles from making contact with another while they are supported on the same apparatus. For example, if the angler is using a single pole and then wishes to erect a second pole, a lateral divider can be connected to the apparatus to separate the two poles. Conversely, if two poles are being used and the angler wishes to put one of the poles away, then the divider can be easily removed to allow the single pole to make use of the entire width of the pole support surface.

Fishing pole support apparatus should be understood as any apparatus suitable and specifically adapted for supporting a fishing pole. The fishing pole support apparatus may also be known as a pole roller.

The pole support surface (surface) is a surface or component of the apparatus which is intended to contact the fishing pole when the pole is being supported by the apparatus. The support surface may be a flat surface, a curved surface, an angled surface, or a composite surface comprised of any combination of flat, curved, and angled surfaces. The surface may be formed by a narrow beam or pole having a width and depth substantially smaller than its length such that the surface forms a substantially line contact with the pole. The surface may preferably be formed of one or more sections having a circular cross-section. The surface may be substantially horizontal in use. The surface may be formed of one or more upward V-shaped sections, such that a pole to be supported is predisposed to move towards the bottom of the V under gravity. The surface may comprise one or more notches, indents, or groves for the location of a fishing pole to be supported. The surface may, in the absence of a divider, be substantially unimpeded, such that a pole resting on the surface may be moved laterally from one end of the surface to the other without interruption.

The laterally repositionable divider (divider) is suitable and specifically adapted for dividing the pole support surface into multiple sections and/or to provide a lateral stop for the surface. Laterally repositionable should be understood to mean that the divider can be located in a plurality of different lateral positions relative to the pole support surface. The divider may be repositioned by removing it from the apparatus and re-attaching it in a different lateral location, or may be adjustable on the apparatus to be moved from a first lateral position to a second lateral position.

The divider may be located substantially on the pole support surface, or may be adjacent the pole support resurface. Each section of the pole support surface defined by the divider may be suitable for the location of one fishing pole. Each section of the pole support surface may be delimited at, or adjacent, each end by a lateral stop. A lateral stop may be any component which prevents poles located either side of said stop from moving laterally to come into contact with one another due to lateral movement. A lateral stop may prevent a pole which remains in contact with the pole support surface from moving laterally past the lateral stop.

The laterally repositionable divider may be removable. The term "removable" should be understood as meaning that the divider is intended for quick and easy removal or connection to the apparatus when the apparatus is in use, possibly using simple hand tools, which may be supplied as part of a kit with the support apparatus. Poles being supported may not have to be removed from the apparatus in order to remove or connect a divider. The removable divider may be manually removable; in other words, the divider may be removed or connected by hand without the use of any additional tools. The divider may be connectable or removable with a simple mechanical connection, such as a bolt, or screw.

A fishing pole support apparatus may further comprise a first lateral stop at a first end of the pole support surface and/or a second lateral stop at a second end of the pole support surface. The purpose of the lateral stops is to prevent a pole on the pole support surface from slipping off the ends of the pole support surface. The first and second lateral stops may be projections which project transverse to, or at an angle from the pole support surface. Alternatively, the lateral stops may be angled or curved portions of the pole roller surface which prevent the pole from dropping off the ends of the pole support surface. It should be understood that the term lateral stop encompasses any barrier provided at the extremity of the pole support surface which prevents a pole from dropping off the sides of the pole support surface.

Preferably, one or more of the pole support surface, the first and second lateral stops, and the removable lateral divider comprise at least one roller. The pole to be supported must be moveable backwards and forwards relative to the apparatus. However, the pole will be in contact at least the pole support surface, and sometimes also one or more of the lateral stops or a removable lateral divider, so the provision of rollers on one or more of these components is desirable in order to facilitate free and substantially unconstrained movement of the pole. The rollers can be longitudinal rollers having a single axis of rotation, omnidirectional rollers having multiple rotation axes, or roller balls having an infinite number of rotation axes. One or more of the rollers may comprise a resiliently deformable covering to cushion contact between the rollers and a pole being supported. The covering may, for example comprise rubber, foam, or silicone. The covering may be shaped to define hills or valleys for guiding a pole supported thereon.

Preferably, the support apparatus comprises a connection member for connecting the removable lateral divider to the fishing pole support apparatus. The connection member may be separate to the pole support surface. Rollers provided on the pole support surface must be free to rotate, so it is desirable to avoid connecting the removable lateral divider in a location where it could impede such rotation. The connection member may be an elongate member which substantially conforms to the pole support surface. The connection member may extend substantially parallel with the pole support surface. It may be desirable to connect the removable lateral divider at varying locations along the pole support surface. Therefore, providing a connection member which is separate to, but conforms to the pole support surface provides that the removable lateral divider can be located at a multiple locations along the pole support surface while maintaining a constant spacing from the pole support surface. It will be understood that the elongate member, in conforming to the pole support surface, may be substantially parallel to the pole support surface along its length.

Therefore, if the pole support surface is linear, the connection member may be parallel to the pole support surface, whereas a curved pole support surface would have a corresponding curved connection member which maintains a constant spacing from the pole support surface. Alternatively, the connection member may be formed of one or more separate connection members at discrete locations on the apparatus, such a tabs or flanges. The divider may be connected to and laterally slidable along the connection member or a member coupled thereto, for example a rail or cross-brace member. The laterally repositionable divider may have a connection portion which encircles or is coupled to the connection member. The divider may be lockable or securable in a plurality of lateral positions along the connection member. The connection member may also be known as a cross-brace.

Preferably, the connection member is located such that the pole support surface is not impeded laterally by the connection member. As there will be instances where the apparatus is utilised without a removable lateral divider connected, it is desirable that the entire width of the pole support surface can be utilised. As the connecting member may be permanently attached to the apparatus, it is desirable that it does not impede laterally the pole support surface. More preferably, the connection member is located in use below the pole support surface. As the pole will rest on the top of the pole support surface under the influence of gravity, locating the connection member below the pole support surface ensures that the connection member does not impede lateral movement of any pole upon the pole support surface in the absence of a removable lateral divider connected to the apparatus.

Preferably, the removable lateral divider is connectable to the fishing pole support apparatus at a plurality of discrete locations. It may be desirable to ensure that the lateral divider divides the pole support surface into equal, or predetermined portions such that each pole on the apparatus is provided with the correct amount of space on the pole support surface. Therefore, providing discrete connection locations ensures that the removable lateral divider (or dividers) can be attached at correct locations without any possibility for user error in locating them correctly. It may not be possible for a removable lateral divider to be connected at a location other than one of the plurality of discrete locations.

Preferably, the pole support surface comprises a plurality of adjacent longitudinal rollers. A number of rollers may arranged along a common rotation axis to provide a substantially constant pole support surface. More preferably, the plurality of discrete locations are adjacent to the interfaces between the plurality of adjacent longitudinal rollers. Therefore, if there is a reduced effectiveness of the rollers at their interface or contact with the adjacent roller may be mitigated by including a removable lateral divider at this location.

Alternatively, a removable lateral divider may be connectable to the connection member at any point along a length of the connection member. In order to facilitate this continuous connection range, the connection member may have a constant cross section such that a connection means of the removable lateral divider may connect to the connection member at any point along its length. The connection means may be a clamp, a bolt, an interference or friction fit, a clip, or any other removable connection.

Preferably, the apparatus may be provided with two or more removable lateral dividers. Therefore, the pole support surface can be divided into three or more portions, each suitable for the location of one fishing pole. As the dividers are removable, the provision of multiple dividers allows that the apparatus is suitable and optimised for use with any number of poles, by providing the maximum possible lateral space on the pole support surface for each of the poles supported.

In a further aspect, the present invention provides a kit of parts for the construction of the fishing pole support apparatus as described above. The fishing pole apparatus, once constructed, may be large and not easy to transport to the remote and natural locations in which fishing takes place, so a kit of parts allows the angler to transport the kit to the desired location and construct the support apparatus on site. The apparatus can then be dismantled into its component parts after use and transported easily once again.

Preferably, the kit comprises any tool necessary to connect the lateral divider to, or remove the lateral divider from the fishing pole support apparatus. Therefore, if the removable connection of the removable lateral divider requires any sort of tool, such as an Allen key, or spanner, the tool is appropriately provided for use in construction of the apparatus.

In a further aspect, the present invention provides a removable lateral divider for use with the fishing pole support apparatus as hereinbefore described. A support apparatus, or kit for the construction thereof may be provided with a predetermined number of removable lateral dividers. However, if the angler wishes to use the support apparatus with more poles than can be separated with the existing number of dividers, additional dividers can be purchased separately.

In a further aspect, the present invention provides a kit of parts for a fishing pole support apparatus comprising: a pole support comprising a pole support surface and at least one leg attachment; a first leg set comprising a first removable leg having a first minimum length, the first removable leg removably attachable to the at least one leg attachment; and a second leg set comprising a second removable leg having a second minimum length different to the first minimum length, the second removable leg removably attachable to the at least one leg attachment.

The pole support can be supported off the ground by one or more of the removable legs provided with the kit. The pole support surface may be as hereinbefore described. Furthermore, the fishing pole support apparatus may comprise some or all of the features herein before described.

The leg attachment may be any means for removably attaching a removable leg to the pole support. The leg attachment may be a threaded connection, an interference fit with the removable leg or a sprung pin connection in which a spring pin in the removable leg or the attachment protrudes through an opening in the other to secure the removable leg in position. The leg attachment may be a cam locking mechanism, The leg attachment may be manually releasable such that a removable leg attached to the leg attachment may be removed without the need for tools. The leg attachment means may be universal such that any of the removable legs from any of the leg sets can be attached to any of the leg attachments.

The first and second sets of legs have different minimum lengths respectively. Therefore, on uneven or sloping ground, appropriate legs can be attached to the leg attachment means to allow all of the removable legs to be in contact with the ground and for the pole support surface to be maintained substantially horizontal. The fishing pole support apparatus constructed from the parts may be comprised of removable legs only from the same set, or a combination of removable legs from different leg sets. The first and second sets of legs may also have different maximum lengths.

The pole support could be used with no removable legs, or fewer removable legs than there are leg attachments. The leg attachments may comprise leg projections such that the attachments are suitable for contact with the ground when a removable leg is not attached to the attachment means.

Preferably, the kit comprises angular adjustment means for independently adjusting an angle of each removable leg. Therefore, the legs can be adjusted to thereby ensure that the pole support surface is horizontal regardless of the topography of the surface on which it is located.

Preferably, the pole support comprises three leg attachments, the first leg set comprises three first removable legs, and the second leg set comprises three second removable legs. The minimum number of legs required to form a stable platform for the fishing pole support apparatus is three, so a kit having three leg attachments can provide a stable adjustable support apparatus once constructed.

More preferably, the pole support comprises four leg attachments, the first leg set comprises four first removable legs, and the second leg set comprises four second removable legs. Four leg attachment points provides that the leg contact with the floor forms a quadrilateral, which can be more stable when considering the forces to be applied to the system.

Preferably, the kit of further comprises a third leg set comprising a third removable leg having a third minimum length different from the first and second minimum lengths. A further set of legs provides more variation in the length of the removable legs. Preferably, the first minimum length is shorter than the second minimum length, which may in turn be shorter than the third minimum length. Therefore, on a steeply sloped bank, two first removable legs may be utilised on one side of the apparatus, and two third removable legs may be utilised on another side of the apparatus such that the pole support surface is maintained at the horizontal. Legs from different leg sets can effectively be mixed and matched with the apparatus to provide an appropriate height and level for the pole support surface.

Further leg sets may be provided having removable legs having minimum lengths different from the first, second, and third minimum lengths.

Preferably, the removable legs comprise an extension mechanism for adjusting the length of the removable leg. Therefore, despite the varied lengths of leg provided by the different leg sets, the removable leg lengths can be fine-tuned as required to suit uneven terrain.

Further advantageous features are described in the further associated dependent claims.

It will be understood by the skilled person that these preferable and advantageous features may be combined with one another and that any resulting embodiments will also be embodiments of the invention.

### DETAILED DESCRIPTION OF THE EMBODIMENT

A better understanding of the present invention will be obtained from the following detailed description. The description is given by way of example only and makes reference to the accompanying drawings, in which:
Figure 1 illustrates a fishing pole support apparatus according to the present invention;
Figure 2 shows the fishing pole support apparatus of Figure 1 during connection of a removable lateral divider;
Figure 3 shows the fishing pole support apparatus of Figure 1 with a single removable lateral divider attached;
Figure 4 shows the fishing pole support apparatus of Figure 1 with multiple removable lateral dividers attached;
Figure 5 shows the fishing pole support apparatus of Figure 1 with the removable legs removed; and
Figure 6 shows the fishing pole support apparatus of Figure 1 with removable legs having different minimum lengths attached.

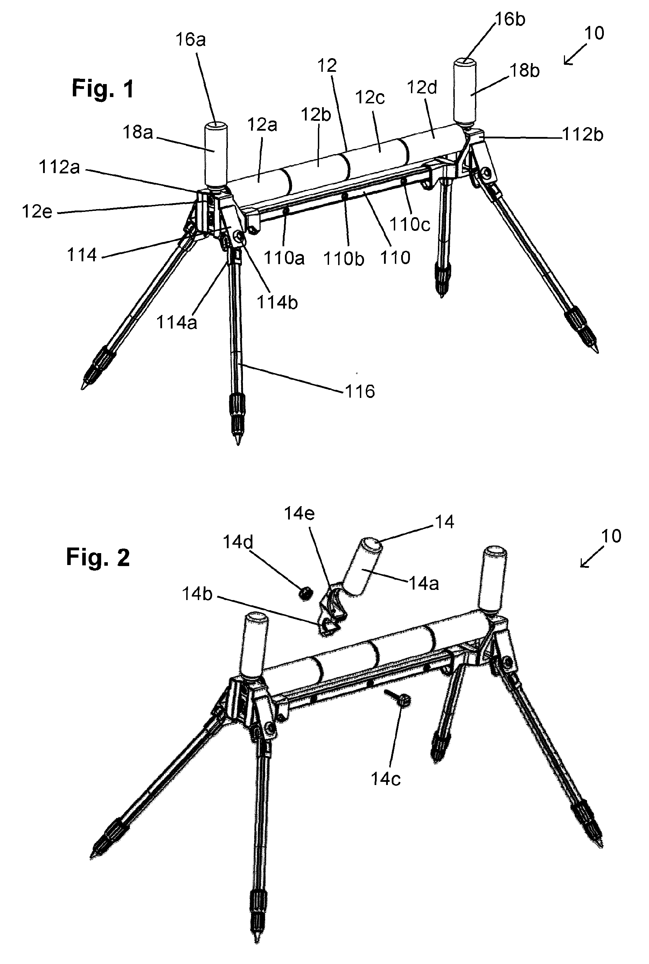

Figure 1 shows a fishing pole support apparatus 10 ("the apparatus"). The apparatus 10 is a four-legged pole roller.

The apparatus 10 comprises a pole support surface 12. The pole support surface 12 ("the surface") is formed of four rollers 12a,b,c,d having a shared axis of rotation arranged in series across the surface 12. Each of the rollers 12a,b,c,d can rotate about its axis independently of the other three rollers. In the described embodiment, a common static axle 12e is provided, and each of the rollers 12a,b,c,d is arranged on the axle having its own bearings to permit independent rotation about the axle 12e.

The axle 12e is secured between two frame portions 112a,b located at either side of the apparatus 10. Each frame portion 112 has an upright lateral stop 16a,b comprising its own roller 18a,b rotatable about a vertical static axle (not shown). Therefore, the surface 12 extends laterally between the two lateral stops 16,a,b. Each roller 18a,b can rotate independently of the other, and also independently of the rollers 12a,b,c,d. The lateral stops 16a,b may be pivotable relative to the frame portions 112 to lie them flat against the surface 12 to allow for easier transport or storage.

The independent rotation of each of the rollers 12,a,b,c,d and 18a,b is important when more than one pole is supported on the surface, as it allows one pole in contact with one roller to be moved (and hence the one roller to rotate) while another pole in contact with another of the rollers can remain still.

A connection member 110 also spans between the frame portions 112a,b. The connection member 110 is a straight beam having a constant cross-section along its length. The connection member 110 is located below and at a constant spacing from the surface 12. Therefore, it is clear from that when a pole is supported by the pole roller surface 12, the connection member 110 itself does not impede lateral movement of the pole. The connection member 110 has three connection locations 110a,b,c spaced equidistantly along its length. The connection locations 110a,b,c are holes formed horizontally through the hole transverse to its long axis. Each of the connection locations 110a,c,b is located at the same lateral location across the apparatus 10 as the interfaces between the rollers 12a,b,c,d. Connection location 110a is at the same lateral location as the interface between rollers 12a,b, connection location 110b is located at the same lateral location as the interface between rollers 12b,c, and, connection location 110c is located at the same lateral location as the interface between rollers 12c,d.

Each of the frame portions 112a,b has at each of its lower corners a leg attachment 114 for the attachment of a removable leg 116. Each leg attachment 114 comprises a locking assembly 114a connected to the frame portion 112 by pivot bolt 114b. The locking assembly 114a can therefore pivot about the pivot bolt 114b to vary the angle at which the locking assembly 114a protrudes from the frame portion 112. In another embodiment, pivot bolt 114b may be replaced by a universal joint such that the angle can be adjusted universally as opposed to the single plane of adjustment available in the illustrated embodiment.

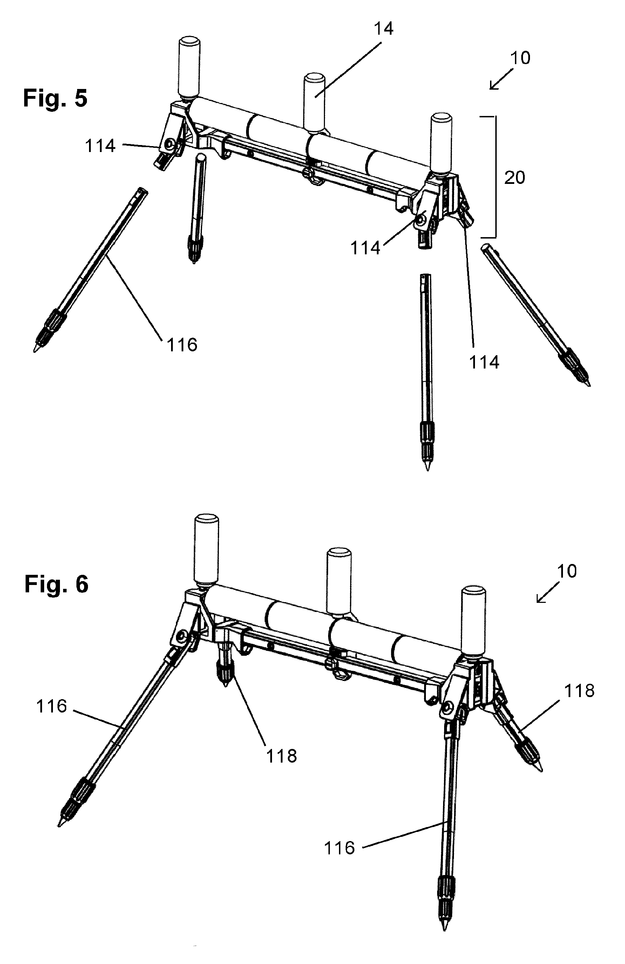

The locking assembly 114a comprises a hollow extrusion having a predetermined cross section, in this case a rounded square or squircle, which is slightly larger than the cross section of the upper end of the removable leg 116, such that the removable leg can be inserted into the locking assembly 114a. The hollow extrusion has an aperture through its wall. The upper end of the removable leg 116 has a protruding sprung pin which can be depressed radially into the leg 116 and which, on insertion into the locking assembly 114a and alignment with the aperture of the locking assembly, protrudes through the aperture, thereby locking the leg 116 in place until such time as the pin is depressed. See also Figure 5 for illustration of the removable legs when not attached to the apparatus 10.

Each removable leg 116 is formed of two tubular sections which can telescope to adjust the length of the leg, and be locked into position relative to one another to thereby lock the leg at a required length. The removable legs 116 will be described in more detail below.

In Figure 1, the apparatus 10 is set up for use with a single fishing pole and has no removable lateral dividers 14 ("divider") connected. It is desirable to have the maximum lateral space on the surface 12 for each pole so that the angler has the largest area to 'aim' for, and to allow room for the pole to move laterally of its own volition (e.g due to a fish bite, or wind) without applying a lateral force to the apparatus 10 which can destabilise or knock over the apparatus 10. So, when only one pole requires support, it is useful to have the full width of the pole support surface 12 uninterrupted by a divider 14.

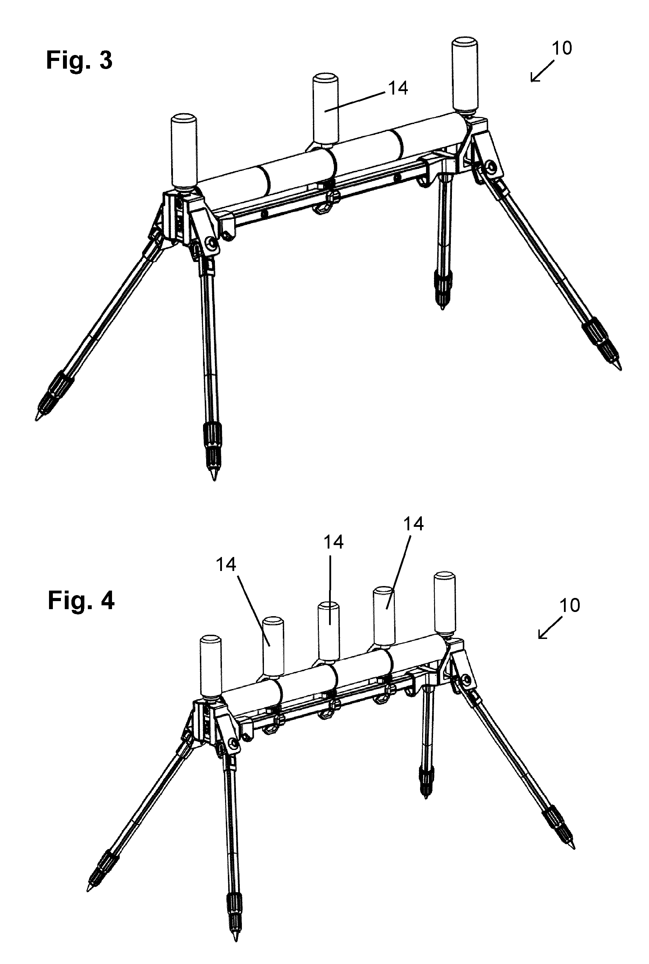

Moving now to Figures 2 and 3, the attachment of a divider 14 is illustrated. The angler may now wish to erect a second fishing pole at the same location as another pole. Therefore, in order to prevent the two poles clashing, a divider 14 can be connected to the apparatus 10 to provide a lateral stop on the pole support surface 12 to separate it into two sections, one for each fishing pole.

The divider 14 comprises an upright roller 14a, a connection portion 14b, and a connector 14c,d. The roller 14a is of similar construction to the lateral stops 16a,b, and is located on a roller arm 14e which locates the roller 14a above the surface 12 but is curved such that no part of the divider 14 contacts (and therefore impedes rotation of) the rollers 12a,b,c,d. For connection of the divider 14 to the apparatus, the connection member 110 is used. The connection portion 14b of the divider 14 has a C-shaped cutaway which is shaped to conform to the outer surface of the connection member 110 at any point along its length. The connection portion 14b also comprises a hole for alignment with the connection locations 110a,b,c. In this instance, the divider 14 is being connected to the apparatus 10 at the central connection location 110b in order to divide the surface 12 into two equally-sized portions for each of the two fishing poles, thereby providing maximum lateral freedom for each of the poles while ensuring their separation.

Once the connection portion 14a is located about the connection member 110 and aligned with the connection location 110b, the connector bolt 14c is passed though the connection location and the connection portion, and the connector nut 14d is tightened onto the bolt 114c in order to secure the divider 14 in place. The connector bolt and nut 14c,d each have a gripping element to allow them to be sufficiently tightened and loosened by hand without additional tools. Once the divider 14 is connected securely, the apparatus appears as shown in Figure 3.

Turning to Figure 4, the apparatus 10 is shown with identical dividers 14 connected at each of the connection locations 110a,b,c. Dividers 14 may be located at all, some, or none of the connection locations 110a,b,c dependent upon the requirements of the user.

It should be understood that instead of the illustrated connection mechanism, the divider 14 may be equipped with a clamping mechanism or otherwise which allows the divider to be connected at any location along the connection member 110. In this instance, the connection locations 110a,b,c with preformed holes may not be required. Markings on the connection member 110 should show advisable or preferable distances along the member 110 (such as half, thirds, quarters, or otherwise along the member 110) in order facilitate quick and efficient securing at desired locations.

It will be understood that the apparatus can be provided as a kit comprising, for example, a pole support 20, one or more dividers 14, and one or more removable legs 116, which can be constructed into a fishing pole support apparatus as required.

Referring now to Figure 5, the pole support 20 with a divider 14 is shown with the removable legs 116 removed.

In this instance, the apparatus 10 is provided as a kit of parts. The kit comprises two separate leg sets (not shown). The first leg set comprises four removable legs 116, which are adjustable in length and have a relatively long minimum length (i.e. when the leg is fully contracted). The second leg set comprising four removable legs 120 having a relatively short minimum length.

The legs 118 have the same diameter and pin arrangement at their upper end to the legs 116 such that they can be attached to the leg attachments 114a in the same way.

As the telescoping removable legs 116 have a minimum length which is similar to the length of each of the telescoping sections of the leg 116, the apparatus 10 may not be able to be arranged so that the surface 12 is horizontal when the ground on which the apparatus 10 is located is steeply sloped. The ground in the vicinity of good fishing (e.g. riverbanks) is often steeply sloped or uneven, so an apparatus having four legs of the same length may not be suitable.

In these instances, one or more of the relatively long legs 116 can be removed and replaced with relatively short legs 118 (as shown in Figure 6) to provide a leg platform which is more suited to the sloping landscape. Although each leg may be telescoped to increase its length, a telescoping leg may not be reduced below a minimum length, so a kit comprising legs having different minimum length legs allows the angler more flexibility in the locations in which the apparatus 10 can be placed.

In addition, the kit may comprise further sets of legs having different minimum lengths to the legs 116,118 to allow yet more flexibility in the relative lengths of the four legs of the apparatus 10.

It will be understood that the fishing pole support apparatus described herein is for exemplary purposes only, and that there are many types of apparatus compatible with the present invention.

The present invention is not limited to the specific embodiments described herein. Alternative arrangements and suitable materials will be apparent to a reader skilled in the art.

## Claims

1. A fishing pole support apparatus comprising:
a pole support surface; and
a laterally repositionable divider connectable to the support apparatus to provide a lateral stop for the pole support surface.

2. A fishing pole support apparatus as claimed in claim 1, wherein the laterally repositionable divider is removable.

3. A fishing pole support apparatus as claimed in claim 1 or 2, further comprising:
a first lateral stop at a first end of the pole support surface; and
a second lateral stop at a second end of the pole support surface;
preferably wherein the pole support surface, and the first and second lateral stops each comprise at least one roller.

4. A fishing pole support apparatus as claimed in any preceding claim, wherein the laterally repositionable divider comprises at least one roller.

5. A fishing pole support apparatus as claimed in any preceding claim, wherein the support apparatus comprises a connection member for connecting the laterally repositionable divider to the fishing pole support apparatus, preferably wherein the connection member is an elongate member which substantially conforms to the pole support surface, and more preferably wherein the connection member is located such that the pole support surface is not impeded laterally by the connection member.

6. A fishing pole support apparatus as claimed in claim 5, wherein the connection member is located in use below the pole support surface.

7. A fishing pole support apparatus as claimed in claim any preceding claim, wherein the laterally repositionable divider is connectable to the fishing pole support apparatus at a plurality of discrete locations, or at any point along a length of the connection member.

8. A fishing pole support apparatus as claimed in any preceding claim, wherein the pole support surface comprises a plurality of adjacent longitudinal rollers, preferably wherein the plurality of discrete locations are adjacent to the interfaces between the plurality of adjacent longitudinal rollers.

9. A fishing pole support apparatus as claimed in any preceding claim comprising two or more laterally repositionable dividers.

10. A kit of parts for the construction of the fishing pole support apparatus of any of the preceding claims.

11. A laterally repositionable divider for use with the fishing pole support apparatus of any of the preceding claims.

12. A kit of parts for a fishing pole support apparatus comprising:
a pole support comprising a pole support surface and at least one leg attachment;
a first leg set comprising a first removable leg having a first minimum length, the first removable leg removably attachable to the at least one leg attachment; and
a second leg set comprising a second removable leg having a second minimum length different to the first minimum length, the second removable leg removably attachable to the at least one leg attachment.

13. A kit of parts for fishing pole support apparatus as claimed in claim 12, wherein:
the pole support comprises three leg attachments;
the first leg set comprises three first removable legs; and
the second leg set comprises three second removable legs;
or wherein:
the pole support comprises four leg attachments;
the first leg set comprises four first removable legs; and
the second leg set comprises four second removable legs.

14. A kit of parts for fishing pole support apparatus as claimed in any any of claims 12 or 13, further comprising:
a third leg set comprising a third removable leg having a third minimum length different from the first and second minimum lengths.

15. A fishing pole support apparatus constructed from a kit of parts as claimed in any of claims 12 to 14, comprising one or more removable legs from the respective leg sets attached to the one or more leg attachments.
